# EUROPÄISCHE PATENTANMELDUNG

(11) **EP 0 863 375 A1**
(43) Veröffentlichungstag der Anmeldung: **09.09.1998**
(21) Anmeldenummer: 98103644.5
(22) Anmeldetag: 02.03.1998
(51) Int. Cl.: F25J 3/02, C01B 23/00, B01D 53/68

(54) **Verfahren zur Krypton- und Xenon-entfernung von fluor- und/oder chlorhaltigen Verunreinigungen**

(30) Priorität: 04.03.1997 DE 19708780
(71) Anmelder: Linde Aktiengesellschaft, 65189 Wiesbaden (DE)
(72) Erfinder: Huala, Michael, 81479 München (DE); Spöri, Ralph, Dipl.-Ing., 82538 Geretsried (DE); Baur, Karl, Dr. rer. nat., 82065 Baierbrunn (DE)

(57) **Zusammenfassung**

Die Erfindung betrifft ein Verfahren zur Gewinnung von Krypton und/oder Xenon in einer Tieftemperaturluftzerlegungsanlage, wobei Krypton und Xenon zu einem Krypton-Xenon-Konzentrat angereichert werden. Mittels Destillation werden anschließend Krypton und/oder Xenon aus dem Krypton-Xenon-Konzentrat gewonnen. Zur Entfernung von fluor- und/oder chlorhaltige Verunreinigungen, insbesondere Fluorkohlenwasserstoffen, CF₄ und/oder SF₆, werden das Krypton-Xenon-Konzentrat und/oder das Krypton und/oder das Xenon in einem festen Sorbens, welches Phyllosilikate enthält, gereinigt.

## Beschreibung

Die Erfindung betrifft ein Verfahren zur Gewinnung von Krypton und/oder Xenon in einer Tieftemperaturluftzerlegungsanlage, wobei Krypton und Xenon zu einem Krypton-Xenon-Konzentrat angereichert werden und mittels Destillation Krypton und/oder Xenon aus dem Krypton-Xenon-Konzentrat gewonnen werden.

Die mit einem Gehalt von etwa 1 ppm Kr und 0,09 ppm Xe in der Luft vorkommenden Edelgase Krypton und Xenon werden durch die Umsetzung beträchtlicher Luftmengen in Luftzerlegungsanlagen gewonnen. Die Siedepunkte von Krypton und Xenon liegen bei 120 K bzw. 165 K, d.h. weit oberhalb der Siedetemperaturen von Stickstoff, Sauerstoff und den anderen Edelgasen. Krypton und Xenon reichern sich deshalb in den üblichen Doppelsäulenrektifikatoren zusammen mit verschiedenen Kohlenwasserstoffen im flüssigen Sauerstoff an.

Zur Kr/Xe-Gewinnung wird ein Teil des mit Kr/Xe-angereicherten, flüssigen Sauerstoffs dem Hauptkondensator entnommen und in eine Kryptonanreicherungssäule geleitet. Aus der Anreicherungssäule erhält man dann ein Krypton-Xenon-Konzentrat, welches ca. 1 % Kr, etwa 0,5 % Kohlenwasserstoffe und 0,1 % Xe enthält. Hauptkomponente ist Sauerstoff.

Die maximale Anreicherung von Kr und Xe wird durch die Zündgrenzen der in dem Konzentrat verbliebenen Kohlenwasserstoffe, insbesondere des Methans, bestimmt. Aufgrund der geringen Flüchtigkeit konzentrieren sich diese bei der Rektifikation ebenfalls im flüssigen Sauerstoff. Bei Überschreiten der Zündgrenze, die bei Methan bei einem Gehalt von 5 Vol % Methan liegt, bilden diese in Gegenwart von Sauerstoff ein explosives Gemisch. Damit auch bei örtlichen Anreicherungen, Fehlfunktionen oder bei Anlagenstillstand keine gefährlichen Methankonzentrationen entstehen, wird in der Praxis ein Sicherheitsfaktor von mindestens 10 eingeplant, d.h. der Methangehalt wird auf maximal 0,5 Vol % beschränkt.

Das aus der Kryptonanreicherungssäule gewonnene Konzentrat wird unter überkritischem Druck verdampft, auf ca. 500 °C erwärmt und über einen Katalysator geleitet, wobei die Kohlenwasserstoffe zu Wasserdampf und Kohlendioxid zersetzt werden. Der Wasserdampf und das Kohlendioxid werden mittels Molekularsieben aus dem Konzentrat entfernt. Dann wird in einer weiteren Destillationskolonne der Sauerstoff entfernt und ein hochangereichertes Krypton-Xenon-Konzentrat gewonnen. In einer sich anschließenden Krypton-Xenon-Rektifikation wird oben aus der Rektifikationssäule Krypton und unten reines, kryptonfreies Xenon abgezogen.

Bei der beschriebenen Gewinnung von Krypton und Xenon in Tieftemperaturluftzerlegungsanlagen werden Kr und Xe etwa um den Faktor 10⁶ bzw. 10⁸ angereichert. Spurenverunreinigungen in der Luft werden dabei ebenfalls angereichert. Hierzu zählen vor allem Treibhausgase wie CF₄, CFCl₃, CF₂Cl₂, C₂F₆ und SF₆.

Fluor- und chlorhaltige Kohlenwasserstoffe (FCKW) sind thermisch sehr stabil. So findet beispielsweise die thermische Zersetzung von CF₄ bei Atmosphärendruck erst bei Temperaturen oberhalb von 900 °C statt. Durch einen Katalysator kann zwar die Zersetzungstemperatur heruntergesetzt werden, jedoch führt der Abbau der Fluorkohlenstoffe zu einer Schädigung des Katalysators. Auch die adsorptive Entfernung von FCKW hat sich bisher bei der Tieftemperaturluftzerlegung als ungeeignet erwiesen, da FCKW von den bekannten Molekularsieben nur schlecht adsorbiert werden, und zudem den Adsorber schädigen.

Krypton und Xenon enthalten daher noch meßbare Mengen an Verunreinigungen, die durch katalytische Zersetzung oder durch Adsorption bisher nicht entfernt werden konnten.

Aufgabe vorliegender Erfindung ist es daher, ein Verfahren der eingangs genannten Art aufzuzeigen, welches die Gewinnung hochreinen, insbesondere von fluor- und/oder chlorhaltige Verunreinigungen, wie Fluorkohlenwasserstoffen, CF₄ und SF₆, befreiten Kryptons und/oder Xenons ermöglicht.

Erfindungsgemäß wird diese Aufgabe dadurch gelöst, daß das Krypton-Xenon-Konzentrat und/oder das Krypton und/oder das Xenon in einem festen Sorbens, welches Phyllosilikate enthält, gereinigt werden, wobei aus dem Krypton-Xenon-Konzentrat und/oder dem Krypton und/oder dem Xenon fluor- und/oder chlorhaltige Verunreinigungen, insbesondere Fluorkohlenwasserstoffe, CF₄ und/oder SF₆, entfernt werden.

Die Verwendung eines Phyllosilikate enthaltenden Sorbens ist aus einem anderen technischen Fachgebiet, nämlich der Entsorgung von halogenierten Kohlenwasserstoffen, beispielsweise von FCKW-Kühlmitteln aus Kühlschränken, aus der DE-A-44 04 329 bekannt. Überraschenderweise hat sich nun herausgestellt, daß sich mit einem derartigen Sorbens auch das in einer Tieftemperaturluftzerlegungsanlage mit Edelgasgewinnung gewonnene Krypton-Xenon-Konzentrat, Krypton und/oder Xenon sehr gut reinigen läßt.

Erfindungsgemäß werden das angereicherte Krypton-Xenon-Konzentrat und/oder die nach der Destillation gewonnenen Produkte Krypton und/oder Xenon durch ein Sorbens, welches Phyllosilikate enthält, geführt. In diesem Sorbens werden im Krypton, Xenon oder im Gemisch derselben befindliche fluor- oder chlorhaltige Verunreinigungen durch Chemisorption gebunden. Insbesondere die mit herkömmlichen Katalysatoren auch bei hohen Temperaturen und bei hohem Sauerstoffgehalt nicht zerstörbaren Fluorkohlenwasserstoffe, wie z.B. CF₄, CCl₂F₂ oder CCl₃F, sowie SF₆ werden abgebaut oder fest gebunden. Bei der chemischen Reaktion in dem Sorbens entstehende fluorhaltige Zersetzungsprodukte werden ebenfalls fest und irreversibel sorbiert. Das aus dem Sorbens austretende Edelgas oder Edelgasgemisch ist somit frei von den bisher nicht oder nur sehr schwer zu entfernenden Fluor- und Chlorverbindungen.

Bisher waren die Endprodukte Krypton mit bis zu 100 ppm CF₄ und Xenon mit bis zu 100 ppm SF₆verunreinigt. Durch Anwendung des erfindungsgemäßen Verfahrens wird es nunmehr möglich, hochreine Endprodukte zu gewinnen, deren Gesamtverunreinigung mit fluor- und chlorhaltigen Verbindungen weniger als 10 ppm beträgt. Von Vorteil werden das Krypton, das Xenon oder das Krypton/Xenon-Gemisch soweit gereinigt, daß die CF₄-Konzentration und die SF₆-Konzentration nach der Behandlung jeweils unter 1 ppm liegen.

Die Entfernung der fluor- und/oder chlorhaltigen Verunreinigungen kann sowohl bei An- als auch bei Abwesenheit von Sauerstoff, bevorzugt jedoch bei Abwesenheit von Sauerstoff, erfolgen. Besonders bevorzugt beträgt der Sauerstoffgehalt nicht mehr als 50 ppm, ganz besonders bevorzugt nicht mehr als 1 ppm. Enthält dagegen der zu behandelnde Gasstrom C₂F₆, wird die Sauerstoffkonzentration vorzugsweise so gewählt, daß für jedes in dem Gasstrom enthaltene Mol C₂F₆ etwa ein halbes Mol Sauerstoff vorhanden ist.

Es ist ferner von Vorteil, das aus der Kryptonanreicherungssäule gewonnene Konzentrat soweit von Kohlenwasserstoffen zu befreien, daß deren Konzentration weniger als 20 ppb beträgt. Auf diese Weise bleibt auch nach der weiteren Anreicherung des Konzentrats der Kohlenwasserstoffgehalt deutlich unterhalb der Zündgrenzen.

Bei der chemischen Reaktion der Fluorkohlenstoffe in dem Sorbens wird als Abbauprodukt Kohlendioxid gebildet. Ferner werden vom Trägermaterial des Sorbens auch Spuren von Sauerstoff und Wasser ausgetragen. Das aus dem Sorbens austretende Krypton und/oder Xenon ist deshalb mit Kohlendioxid, Wasser und Sauerstoff verunreinigt. Zweckmäßigerweise werden daher nach der Reinigung in dem Sorbens Wasser, Kohlendioxid und/oder Sauerstoff aus dem Krypton-Xenon-Konzentrat und/oder dem Krypton und/oder dem Xenon wieder entfernt, um hochreine Endprodukte zu erhalten.

Die Entfernung von Wasser und/oder Kohlendioxid erfolgt vorteilhaft mittels eines Molekularsiebs. In der Regel werden zwei wechselweise betreibbare Molekularsiebadsorber verwendet, von denen der eine mit Kohlendioxid und Wasserdampf beladen wird, während der andere regeneriert wird. Der aktive, d.h. zu beladende Molekularsiebadsorber wird zweckmäßigerweise bei einer Temperatur knapp oberhalb des Gefrierpunktes von Wasser betrieben, da dadurch der zu adsorbierende Wasserdampfgehalt minimiert wird.

Der nach der erfindungsgemäßen Reinigung in dem Krypton, Xenon oder Krypton-Xenon-Konzentrat befindliche Sauerstoff wird vorzugsweise mittels eines Ni-Cu-Kontaktes aus dem Gas oder Gasgemisch entfernt. Die Sauerstoffentfernung kann sowohl vor als auch nach der Entfernung von Wasser und/oder Kohlendioxid erfolgen. Vorzugsweise wird das Krypton, Xenon oder Krypton-Xenon-Gemisch jedoch nach der Entfernung von Wasser und/oder Kohlendioxid vom Sauerstoff befreit.

Eine besonders gute Reinigungswirkung erreicht man, wenn das Krypton-Xenon-Konzentrat und/oder das Krypton und/oder das Xenon bei einem Druck zwischen 1 bar und 10 bar, vorzugsweise zwischen 2 bar und 3 bar, gereinigt werden.

Hinsichtlich des Temperaturbereiches hat es sich als günstig erwiesen, das Krypton-Xenon-Konzentrat und/oder das Krypton und/oder das Xenon bei einer Temperatur zwischen 300 °C und 600 °C, vorzugsweise zwischen 450 °C und 550 °C, zu reinigen.

Vorzugsweise wird die erfindungsgemäße Reinigung mittels des Phyllosilikat enthaltenden Sorbens vor der Trennung des Krypton-Xenon-Konzentrats in Krypton und Xenon vorgenommen. Dadurch können in einem einzigen Reinigungsschritt sowohl das Krypton als auch das Xenon von fluor- und chlorhaltigen Verunreinigungen befreit werden. Auf eine doppelte Ausführung aller für die erfindungsgemäße Reinigung notwendigen Vorrichtungen kann somit verzichtet werden.

Es kann aber auch vorteilhaft sein, die Einzelprodukte Krypton und Xenon und nicht das angereicherte Gemisch der beiden Edelgase erfindungsgemäß zu reinigen. Bei der Reinigung des angereicherten Gemisches werden in dem Sorbens unterschiedliche Stoffe, wie CF₄ und SF₆, gebunden. Ist das Sorbens für einen dieser Stoffe, z.B. CF₄, gesättigt, muß das Sorbens komplett ausgetauscht werden, auch wenn das Sorbens andere Verunreinigungen, z.B. SF₆, noch aufnehmen könnte. Dagegen muß bei einer Reinigung der Einzelprodukte nach der Krypton-Xenon-Trennung Krypton im wesentlichen nur von CF₄ und Xenon von SF₆ befreit werden. Das Sorbens kann in diesem Fall auf ein spezielles Adsorbens ausgelegt werden, und die Aufnahmekapazität des Sorbens voll ausgenutzt werden.

Besonders reine Endprodukte erhält man, wenn dem Phyllosilikate enthaltenden Sorbens ein zu reinigender Strom mit bereits mehr als 99%, vorzugsweise mehr als 99,9 %, Krypton oder mehr als 99%, vorzugsweise mehr als 99,9 %, Xenon oder mehr als 99%, vorzugsweise mehr als 99,9 %, eines Krypton/Xenon-Gemisches zugeführt wird. Wird erfindungsgemäß ein Krypton/Xenon-Gemsich gereinigt, so erweist sich ein Mischungsverhältnis von ungefähr 80% Krypton und ungefähr 20 % Xenon in dem zu behandelnden Strom als günstig.

Die Erfindung hat sich insbesondere dann als vorteilhaft erwiesen, wenn der zu behandelnde Strom weniger als etwa 100 ppm CF₄ und weniger als etwa 100 ppm SF₆ enthält. Der Gehalt an C₂F₆ liegt vorzugsweise unter 20 ppm.

Die Erfindung sowie weitere vorteilhafte Einzelheiten der Erfindung werden im folgenden anhand von dem in der schematischen Zeichnung dargestellten Ausführungsbeispiel näher erläutert.

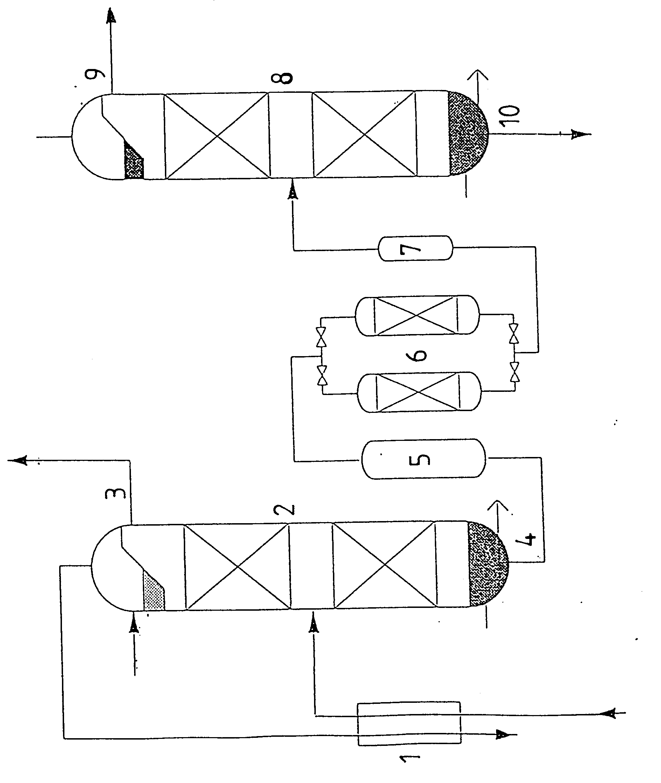

Hierbei zeigt die einzige Figur einen Ausschnitt aus einem Verfahrensschema einer Luftzerlegungsanlage mit Krypton- und Xenongewinnung.

Das aus der nicht dargestellten Kryptonanreicherungskolonne gewonnene Krypton-Xenon-Konzentrat wird auf etwa 500 °C erhitzt und über einen Edelmetall-Verbrennungs-Katalysator geleitet, der eine vollständige Zerstörung des in dem Konzentrat befindlichen Methans bewirkt. Die bei dieser Reaktion entstehenden Produkte Wasser und Kohlendioxid werden anschließend in Molekularsieben adsorbiert.

Das Krypton-Xenon-Konzentrat wird dann in einem Wärmetauscher 1 abgekühlt und einer ersten Kryptonsäule 2 zugeführt. Sauerstoff besitzt einen niedrigeren Siedepunkt als Krypton und Xenon und kann daher am Kopf 3 der Säule 2 abgezogen werden. Aus dem Sumpf 4 der Kryptonsäule 2 gewinnt man ein hochangereichertes, weitgehend sauerstofffreies Krypton-Xenon-Gemisch, welches allerdings noch mit Spurenverunreinigungen der Luft, wie CF₄ oder SF₆, beladen ist, die durch die vorgeschalteten Katalysatoren und Adsorber nicht entfernt werden konnten und sich ebenfalls angereichert haben.

Das Krypton-Xenon-Konzentrat wird einem Sorbens 5 zugeführt, welches zu mindestens 10 %, vorzugsweise mehr als 50 %, Phyllosilikate enthält. Die in dem Konzentrat enthaltenen Verunreinigungen werden von dem Sorbens 5 durch Chemisorption irreversibel gebunden. Die Reaktion findet bei einem Druck zwischen 2 und 3 bar, bevorzugt bei 2,5 bar statt. Die Temperatur wird zwischen 450 °C und 550 °C, vorzugsweise zu 500 °C, gewählt. In dem Sorbens 5 wird das Konzentrat von allen verbliebenen Verunreinigungen befreit.

Bei den chemischen Reaktionen in dem Sorbens 5 entsteht jedoch als Abbauprodukt Kohlendioxid. Ferner werden Wasserdampf und Sauerstoff aus dem Sorbens 5 herausgelöst. Zur Entfernung des Kohlendioxids und des Wassers wird das Konzentrat durch zwei wechselseitig betriebene Molekularsiebadsorber 6 geleitet, von denen jeweils der eine beladen, während der andere regeneriert wird.

Die Regenerierung der Molekularsiebadsorber 6 erfolgt vorzugsweise mit Sauerstoff. Nach der Regenerierung wird der Molekularsiebadsorber 6 in einen Gasballon entleert und evakuiert. Das in dem Gasballon aufgefangene Gas wird in den Luftzerlegungsprozeß wieder zurückgeführt, so daß die Verluste, insbesondere Krypton- und Xenon-Verluste, bei der Regenerierung minimiert werden.

Das Konzentrat wird anschließend über einen Ni-Cu-Kontakt 7 geführt, wobei das Krypton-Xenon-Konzentrat von den restlichen Spuren von Sauerstoff befreit wird. Das gereinigte Konzentrat wird dann in eine weitere Rektifikationssäule 8 eingespeist, aus deren Kopf 9 hochreines Krypton und aus deren Sumpf 10 hochreines Xenon abgezogen werden können.

## Patentansprüche

1. Verfahren zur Gewinnung von Krypton und/oder Xenon in einer Teftemperaturluftzerlegungsanlage, wobei Krypton und Xenon zu einem Krypton-Xenon-Konzentrat angereichert werden und mittels Destillation Krypton und/oder Xenon aus dem Krypton-Xenon-Konzentrat gewonnen werden, **dadurch gekennzeichnet**, daß das Krypton-Xenon-Konzentrat und/oder das Krypton und/oder das Xenon in einem festen Sorbens, welches Phyllosilikate enthält, gereinigt werden, wobei aus dem Krypton-Xenon-Konzentrat und/oder dem Krypton und/oder dem Xenon fluor- und/oder chlorhaltige Verunreinigungen, insbesondere Fluorkohlenwasserstoffe, CF₄ und/oder SF₆, entfernt werden.

2. Verfahren nach Anspruch 1, dadurch gekennzeichnet, daß nach der Reinigung in dem Sorbens Wasser, Kohlendioxid und/oder Sauerstoff aus dem Krypton-Xenon-Konzentrat und/oder dem Krypton und/oder dem Xenon entfernt werden.

3. Verfahren nach Anspruch 2, dadurch gekennzeichnet, daß Wasser und/oder Kohlendioxid mittels eines Molekularsiebs entfernt werden.

4. Verfahren nach einem der Ansprüche 1 bis 3, dadurch gekennzeichnet, daß das Krypton-Xenon-Konzentrat und/oder das Krypton und/oder das Xenon bei einem Druck zwischen 1 bar und 10 bar, vorzugsweise zwischen 2 bar und 3 bar, gereinigt werden.

5. Verfahren nach einem der Ansprüche 1 bis 4, dadurch gekennzeichnet daß das Krypton-Xenon-Konzentrat und/oder das Krypton und/oder das Xenon bei einer Temperatur zwischen 300 °C und 600 °C, vorzugsweise zwischen 450 °C und 550 °C, gereinigt werden.
